# FASCICULE DE BREVET EUROPEEN

(11) **EP 3 332 493 B1**
(45) Date de publication et mention de la délivrance du brevet: **27.09.2023**
(21) Numéro de dépôt: 16757314.6
(22) Date de dépôt: 01.08.2016
(51) Int. Cl.: H04B 10/40, H04B 10/61, H04B 10/63

(54) **RÉCEPTION DE SIGNAUX OPTIQUES MULTI-LONGUEURS D'ONDE COMPOSÉS DE RAFALES OPTIQUES MONO-BANDES**
EMPFANG VON OPTISCHEN, AUS EINZELBANDIGEN OPTISCHEN BURSTS BESTEHENDEN SIGNALEN MIT MEHREREN WELLENLÄNGEN
RECEPTION OF MULTIPLE-WAVELENGTH OPTICAL SIGNALS CONSISTING OF SINGLE-BAND OPTICAL BURSTS

(30) Priorité: 05.08.2015 FR 1557561
(43) Date de publication de la demande: 13.06.2018
(73) Titulaire: Orange, 92130 Issy-les-Moulineaux (FR)
(72) Inventeur: HAN, Bing, 22300 Lannion (FR); SONG, Mengdi, 22300 Lannion (FR); GAVIGNET, Paulette, 22730 Trégastel (FR); PINCEMIN, Erwan, 22290 Gommenec'h (FR)
(86) Numéro de dépôt international: PCT/FR2016/052001
(87) Numéro de publication internationale: WO 2017/021645

(56) Documents cités:
- US-A1- 2010 178 056
- US-A1- 2010 310 256
- US-A1- 2013 177 027

## Description

Le domaine de l'invention est celui des réseaux de communications optiques. Plus précisément, l'invention concerne l'amélioration de l'utilisation des ressources réseau dans de tels réseaux optiques.

La croissance exponentielle du volume des données échangées au sein des réseaux de communication optiques impose une augmentation sans cesse croissante du débit des interfaces de transmission, qui atteignent aujourd'hui 100 Gbit/s et plus.

La contrepartie de cette augmentation du débit des interfaces est que le remplissage des canaux de transmission peut être relativement inefficace si ce n'est au travers d'une agrégation électronique coûteuse en interfaces de conversion optique-électrique-optique (O-E-O) et peu économe en énergie.

Traditionnellement, il existait deux types de solution optiques permettant d'accéder à la granularité sous la longueur d'onde conduisant ainsi à une meilleure utilisation des ressources en remplissant plus efficacement les canaux de transmission. Le premier type de solution utilise le domaine temporel, il s'agit de la solution SLPSN (Sub-Lambda Photonically Switched Networks) telle que décrite notamment dans "Terms and définitions for Sub-Lambda Photonically Switched Networks", ITU, COM15-C2322 Rev.-E, Genève, Août 2012 ; le deuxième type de solution utilise le domaine spectral, il s'agit de l'OFDM multi-bandes (Orthogonal Frequency Division Multiplexing), tel que décrit notamment par E. Pincemin et al., dans "Multi-band OFDM Transmission with Sub-band Optical Switching,", Proc. ECOC 2013, invited paper Th.2.A.1 (2013).

Les solutions SLPSN (« Sub-Lambda Photonically Switched Networks » pour « réseaux à commutation photonique sous la longueur d'onde ») reposent sur la commutation photonique de tranches temporelles de longueurs d'onde appelées rafales (en anglais « bursts »), slots ou plus généralement SLPS Units (SLPSU). De ce fait, les solutions SLPSN se démarquent des techniques TDM (pour « Time Division Multiplexing » ou multiplexage temporel) telles que OTN/SDH (pour « Optical Transport Network/Synchronous Digital Hierarchy ») mais aussi des techniques paquets (ATM (pour « Asynchronous Transfer Mode »), Ethernet, IP (pour « Internet Protocol »), ...) qui opèrent cette commutation dans le domaine électrique. Elles se démarquent également des solutions Optical Circuit Switching (OCS), qui réalisent la commutation de longueurs d'onde entières, pour de très longues durées et avec des temps de commutation/reconfiguration lents (de l'ordre de la dizaine de millisecondes).

Les solutions spectrales pour accéder à la granularité sous la longueur d'onde reposent sur l'utilisation du format de modulation « Orthogonal Frequency Division Multiplexing » multi-bandes (MB-OFDM) constitué de différentes bandes de fréquence indépendantes que l'on peut router dans un réseau maillé séparément. La technologie OFDM multi-bandes consiste ainsi à juxtaposer les bandes spectrales correspondant à plusieurs signaux multi-longueurs d'onde OFDM indépendants, de façon à transporter des débits plus élevés que ce que permettrait une technologie mono-bande. Chaque signal OFDM est constitué de plusieurs centaines de sous-porteuses (128, 256, 512, ...).

Récemment, une solution reposant sur l'accès à la granularité sous la longueur d'onde aussi bien dans le domaine temporel que dans le domaine spectral a été proposée. Dans cette solution, il a été envisagé de combiner la solution temporelle d'accès à la granularité sous la longueur d'onde (SLPSN), en utilisant des rafales optiques de données (émises sur des temps très courts de l'ordre de quelques µs), et la solution spectrale d'accès à la granularité sous la longueur d'onde telle qu'offerte par la technologie MB-OFDM, en utilisant une juxtaposition de bandes spectrales correspondant à des signaux OFDM indépendants.

Cette solution se base sur un mécanisme de commutation optique de rafales, permettant un aiguillage optimal dans les noeuds « coeur » du réseau optique, dans lequel les émetteurs optiques des noeuds sources sont accordables alors que les récepteurs optiques des noeuds destinataires ne le sont pas. En d'autres termes, une longueur d'onde spécifique est associée à chaque noeud destinataire, les noeuds sources pouvant émettre à n'importe quelle longueur d'onde. L'aiguillage des rafales de données se base ainsi sur la coloration (i.e. la longueur d'onde) des rafales optiques au niveau du noeud coeur, ainsi qu'éventuellement sur la pré-configuration de la couleur reçue par le noeud destinataire lorsque les noeuds destinataires utilisent des récepteurs cohérents.

Un système alternatif pourrait cependant aussi être envisagé, dans lequel les récepteurs optiques des noeuds destinataires sont accordables en longueur d'onde, les émetteurs optiques des noeuds sources pouvant alors être fixes en longueur d'onde (dans ce cas, chaque longueur d'onde est associée à un noeud source, et c'est le récepteur qui doit s'accorder sur la longueur d'onde qui lui est destinée) ou accordables en longueur d'onde (dans ce cas, une couleur - ou longueur d'onde - est associée à une liaison, une liaison étant définie par les noeuds source et destinataire qu'elle relie pendant la durée de la transmission des rafales entre ces deux noeuds).

Dans un tel système, des rafales de données colorées utilisant par exemple la modulation OFDM à détection cohérente peuvent circuler dans le réseau. D'un point de vue spectral, ces rafales sont arrangées sous la forme de sous-bandes de largeur typiquement comprise entre 8 à 10 GHz, centrées sur des longueurs d'onde espacées de 10 GHz. D'un point de vue temporel, ces rafales de données peuvent avoir une durée typique d'à peu près 5 µs et peuvent être séparées par des intervalles de temps d'environ 500 ns durant lesquels aucune donnée utile n'est transportée (par exemple sous la forme d'un intervalle inter-rafale de 300 ns complètement vide de données et d'un préambule de 200 ns durant lequel seules des données de synchronisation, servant à récupérer une horloge, sont transmises).

Pour pouvoir recevoir et détecter de telles « rafales colorées » au niveau des noeuds destinataires, il est nécessaire de disposer de récepteurs cohérents qui soient très rapidement accordables, afin de pouvoir changer très rapidement de couleur (i.e. de longueur d'onde) en réception, entre deux rafales consécutives. En effet, les récepteurs optiques cohérents classiques utilisent comme oscillateur local des lasers accordables dont la longueur d'onde doit être ajustée à la longueur d'onde du signal de données reçu pour pouvoir détecter ce signal.

Ainsi, au vu des caractéristiques de rafales colorées précédemment décrites, pour pouvoir détecter des séries de rafales colorées (à différentes longueurs d'onde) avec un seul récepteur optique cohérent utilisant un laser accordable comme oscillateur local, ce laser accordable doit pouvoir s'accrocher en moins de 100 ns à la longueur d'onde à recevoir (en intégrant le laps de temps nécessaire à l'estimation de canal). De plus, sa largeur de raie ne devrait pas excéder 100 KHz afin de ne pas générer un niveau rédhibitoire de bruit de phase.

Or les lasers accordables connus actuellement n'ont pas de telles performances. On peut classer ces lasers accordables selon les trois méthodes de contrôle de longueur d'onde généralement utilisées :
- Les lasers à ajustement de longueur d'onde contrôlé par la température, comme les lasers DFB (Distributed Feedback Laser). Avec ces lasers, la plage de réglage est de l'ordre de 2 à 3 nm. Une variation de la température d'un degré permet de faire varier la longueur d'onde de 0.1 nm, soit 2 nm pour 20 degrés. Le temps de changement de la longueur d'onde est de l'ordre de la milliseconde, ce qui est beaucoup trop lent pour ajuster la longueur d'onde entre deux rafales colorées successives.
- Les lasers à ajustement de longueur d'onde contrôlé de manière mécanique, tels que les lasers à émission par la surface à cavité verticale (VCSEL) utilisant un ajustement de la longueur de la cavité laser par micro-miroir à réglage électromécanique (MEMS), et les lasers à cavité externe (ECL). Bien que ces deux types de laser présentent des largeurs de raies très fines, de l'ordre de quelques dizaines de kHz (50-100 kHz typique), leur temps de commutation est respectivement de l'ordre de la microseconde pour les VCSEL à MEMS et de l'ordre de la milliseconde pour les ECL, ce qui est trop long également.
- Les lasers à ajustement de longueur d'onde contrôlé électroniquement, tels que les lasers DS-DBR (Digital Supermode Distributed Bragg Reflector), présentent un temps de réaction typiquement de l'ordre de 100 ns. Malheureusement, leur largeur de raie de l'ordre de 2 MHz génère un trop fort niveau de bruit de phase. Une autre classe de lasers, les lasers SG-DBR (Sampled-Grating Distributed Bragg Reflector) ou leurs dérivés, les lasers MG-Y (Modulated-Grating Y-branch), ajustent également rapidement leur longueur d'onde (typiquement en 10 ns selon la rapidité de l'électronique de commande utilisée) mais ont une largeur de raie insuffisamment fine de l'ordre de 1 à 5 MHz.

Ainsi, il n'existe pas actuellement de laser accordable suffisamment rapidement, qui plus est avec une largeur de raie suffisamment fine, pour permettre de réaliser un oscillateur local dans un récepteur cohérent rapidement accordable adapté aux signaux de type rafales colorées.

La demande US 2010/0310256 décrit, pour sa part, un récepteur optique cohérent pour la réception de signaux optiques multi-longueurs d'onde (WDM) classiques (i.e. de type « circuit continu »). Ce récepteur comprend ainsi un système de génération d'un ensemble de N oscillateurs locaux mono-longueur d'onde à des longueurs d'ondes distinctes, à partir d'une source unique démultiplexée en longueurs d'onde. Il comprend en outre un diviseur optique pour diviser le signal optique à recevoir en N composantes de puissance inférieure, chacune de ces composantes étant ensuite mélangée avec un 'oscillateur local mono-longueur d'onde avant détection du mélange optique obtenu à cette seule longueur d'onde spécifique.

Un tel récepteur optique est cependant très complexe et coûteux, car il nécessite la combinaison d'un grand nombre de composants, notamment d'un diviseur optique 1/N pour le signal à recevoir et d'un démultiplexeur optique 1xN pour les oscillateurs locaux à générer, N hybrides optiques et N photorécepteurs (pour chaque longueur d'onde considérée de l'oscillateur local optique généré). Une telle structure induit des pertes optiques limitant la réception à des signaux optiques suffisamment puissants. De plus, un tel récepteur optique est peu évolutif du fait de l'utilisation obligatoire d'un démultiplexeur optique 1xN et d'un diviseur optique 1xN couplés à N composants hybrides optiques, ce qui pose problème lorsque la grille de longueurs d'onde employée sur le réseau évolue.

La demande US 2010/0178056 décrit également un récepteur optique cohérent pour la réception de signaux optiques multi-longueurs d'onde (WDM) classiques (i.e. de type « circuit continu »). Ce récepteur comprend ainsi un composant hybride optique de diversité de polarisation dans lequel sont mélangés un signal optique entrant et un oscillateur local multi-longueurs d'onde. Ce composant hybride délivre quatre signaux de sortie, chacun de ces signaux étant démultiplexés en M composantes spectrales, les 4xM signaux résultants étant respectivement fourni à une photodétecteur pour être détecté.

Un tel récepteur optique est également très complexe et coûteux, car il nécessite la combinaison d'un grand nombre de composants, notamment de 4 démultiplexeurs 1xM et de 4xM photodétecteurs. Une telle structure induit donc également des pertes optiques limitant la réception à des signaux optiques suffisamment puissants. De plus, un tel récepteur optique est peu évolutif du fait de l'utilisation obligatoire de démultiplexeurs optiques 1xM couplés à un composant hybride optique, ce qui pose problème lorsque la grille de longueurs d'onde employée sur le réseau évolue.

La présente invention vient répondre à ces inconvénients, en proposant un récepteur optique cohérent, simple de conception et qui soit capable de détecter efficacement un signal optique multi-longueurs d'onde composé d'une succession de rafales optiques mono-bandes.

Elle propose à cet effet un récepteur optique cohérent selon la revendication 1.

Il est ainsi possible d'implémenter un récepteur optique capable de recevoir des rafales optiques multi-longueurs d'onde, sans avoir à recourir à des mécanismes d'ajustement en longueur d'onde de composants tels que des lasers pour détecter différentes longueurs d'onde, et donc en s'affranchissant des contraintes d'accordabilité rapide de ces composants difficilement compatibles avec la réception de rafales optique multi-longueurs d'onde. En outre, ce récepteur permet la réception de rafales multi-longueurs d'onde sans recourir à l'usage de démultiplexeurs optiques figés spectralement et à la multiplication de composants à combiner entre eux proportionnellement au nombre de longueurs d'onde utilisées dans le réseau.

Dans un mode de réalisation particulier, la bande passante des moyens de détection est agencée pour ne laisser passer que le battement entre ladite au moins une rafale optique mono-bande et la raie optique de longueur d'onde correspondant à la longueur d'onde portant ladite au moins une rafale optique mono-bande et rejeter les battements entre ladite au moins une rafale optique mono-bande et les autres raies optiques de longueur d'onde ne correspondant pas à la longueur d'onde portant ladite au moins une rafale optique mono-bande

Ce mode de réalisation, en permettant d'obtenir directement et simplement le signal à détecter à partir des rafales reçues sans avoir besoin de recourir à des composants supplémentaires ou à un plan de commande particulier, est particulièrement approprié pour un réseau optique capable d'organiser les rafales de sorte à ce qu'elles arrivent de manière successive, sans chevauchement temporel, au niveau du noeud destinataire.

Dans un mode de réalisation particulier, les moyens de génération optique comprennent une source optique générant un signal optique à longueur d'onde continue et un module de génération multi-longueurs d'onde agencé pour délivrer, à partir du signal optique à longueur d'onde continue reçu de la source optique, l'oscillateur local optique multi-longueurs d'onde, ce qui permet d'implémenter simplement, et de manière économe en énergie et peu coûteuse, ce type de récepteur optique.

De manière avantageuse, la source optique génère un signal optique de largeur de raie spectrale inférieure à 400 kHz, en particulier de largeur de raie spectrale égale à 100 kHz. Avec cette caractéristique, un tel récepteur optique, outre sa capacité à recevoir des rafales optique multi-longueurs d'onde, présente un faible bruit de phase, permettant une détection correcte des données transmises sur les rafales reçues.

Dans un mode de réalisation particulier, les moyens de détection comprennent au moins un module optique, en particulier un filtre optique et/ou un module de conversion photo-électrique, la bande passante des moyens de traitement correspondant à la bande passante du module optique et présentant une largeur spectrale supérieure à la largeur de la bande spectrale de ladite au moins une rafale optique mono-bande.

Le filtrage du battement pour chaque rafale est alors fait dans le domaine optique, avec tout ce que cela comporte comme avantages associés au traitement dans le domaine optique, notamment en termes d'intégration avec d'autres composants optiques.

Dans un autre mode de réalisation particulier, les moyens de détection comprennent un module de conversion photo-électrique suivi d'au moins un module électrique traitant le signal optique mélangé après conversion dans le module de conversion photo-électrique, en particulier un module de conversion analogique-numérique et/ou un module de traitement numérique, la bande passante des moyens de traitement correspondant à la bande passante du module électrique et présentant une largeur spectrale supérieure à la demi-largeur de la bande spectrale de ladite au moins une rafale optique mono-bande.

Le filtrage du battement pour chaque rafale est alors fait dans le domaine électrique, avec une finesse de filtrage propre aux composants électriques, permettant d'isoler simplement des bandes spectrales qui seraient difficilement isolables dans le domaine optique du fait de leur faible largeur spectrale, notamment lorsque cette dernière est inférieure à 10 GHz.

Avantageusement, la bande passante des moyens de détection recouvre au moins une fréquence centrale égale à la différence entre la longueur d'onde portant ladite au moins une rafale optique mono-bande et la longueur d'onde de la raie optique correspondant à ladite longueur d'onde porteuse, en particulier une fréquence centrale nulle.

Le filtrage du battement pour chaque rafale est alors fait en utilisant des composants électriques travaillant en bande de base, tels que des convertisseurs analogique-numérique offrant un bruit de quantification réduit ainsi qu'une meilleure bande passante.

Selon un autre aspect de l'invention, les bandes spectrales des rafales optiques mono-bandes sont séparées par un intervalle spectral de garde et où la largeur de la bande passante des moyens de détection est inférieure à la demi-somme de la largeur de la bande spectrale d'une des rafales mono-bandes et des largeurs des intervalles spectraux de garde l'entourant.

On garantit ainsi qu'un seul battement est conservé, pour chaque rafale optique mono-bande reçue, et donc que le signal électrique en sortie des moyens de détection fournit directement la sous-bande spectrale de données à recevoir, sans avoir besoin de traiter plus avant ce signal pour y filtrer d'autres battements.

Dans un mode de réalisation avantageux, la largeur de la bande spectrale des rafales optiques mono-bande est inférieure ou égale à 8 GHz et où la largeur des intervalles spectraux de garde est supérieure ou égale à 1 GHz et où la largeur de la bande passante des moyens de détection est comprise entre 4 et 5 GHz.

La présente invention vise également un émetteur-récepteur optique selon la revendication 8.

Dans un tel émetteur-récepteur, outre les avantages côté réception déjà mentionnés en terme de compatibilité avec la réception de rafales optiques multi-longueurs d'onde, on réutilise une partie du signal multi-longueurs d'onde généré localement pour émettre des rafales, ce qui représente un gain de coût en termes de mutualisation de lasers. En outre, l'utilisation de tels émetteurs-récepteurs dans des noeuds de réseau optiques permet d'implémenter simplement une architecture avec accordabilité en longueur d'onde aussi bien en émission qu'en réception, dans laquelle une longueur d'onde peut être utilisée pour une liaison réseau donnée, offrant une flexibilité accrue.

Dans un mode de réalisation particulier, ces moyens d'émission comprennent :
un démultiplexeur optique agencé pour séparer ladite au moins une partie de l'oscillateur optique local multi-longueurs d'onde en une pluralité de signaux optiques mono-longueur d'onde correspondant auxdites raies optiques ;
une pluralité de portes optiques recevant respectivement lesdits signaux optiques correspondant auxdites raies optiques,
un multiplexeur optique combinant les sorties desdites portes optiques ; et
un modulateur optique agencé pour moduler, sur une largeur de bande spectrale déterminée, le signal optique en sortie du multiplexeur optique avec des données à transmettre.

La présente invention vise en outre un procédé de réception cohérente selon la revendication 10.

Selon une caractéristique avantageuse de l'invention, les étapes de mélange et de filtrage sont répétées itérativement pour chaque rafale optique mono-bande successive composant le signal optique multi-longueurs d'onde.

La présente invention vise enfin un réseau optique comprenant au moins un récepteur optique cohérent et/ou un émetteur-récepteur optique tels que décrits ci-avant.

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la figure 1 présente le principe général de découpe du canal de transmission dans les domaines temporel et spectral ;
- la figure 2 illustre un exemple de répartition des données dans les intervalles temporels et les bandes spectrales avec ce type de découpe du canal de transmission ;
- la figure 3 présente un exemple de réseau optique reposant sur une solution d'accord en longueur d'onde au niveau des noeuds destinataires ;
- la figure 4 illustre un récepteur optique cohérent selon un mode de réalisation de l'invention ;
- la figure 5 illustre une variante du récepteur optique selon un mode de réalisation de l'invention ; et
- la figure 6 illustre un émetteur-récepteur optique selon un autre mode de réalisation de l'invention.

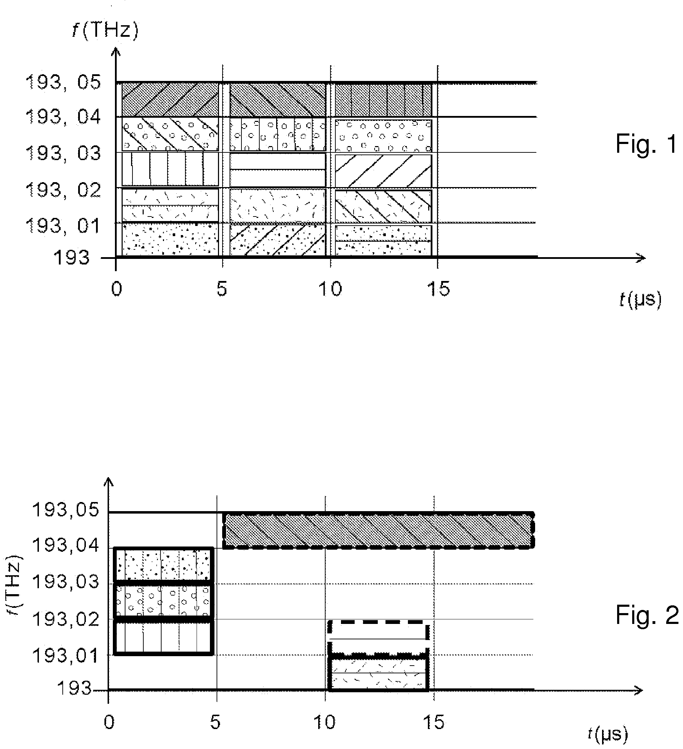

On présente désormais, en relation avec la **figure 1****,** un exemple de représentation d'un canal de transmission découpé dans les domaines temporel et spectral, à savoir :
- une découpe temporelle par rafale de données (sur la figure 1, les rafales de données présentent une durée de 4.5 µs pour une durée d'intervalles de 5 µs par exemple) et
- une découpe spectrale par bande (ici de 10 GHz, cinq bandes étant illustrées sur la figure 1 pour former un canal de 50 GHz).

Sur la figure 1, les trames de fond (grisée, pois, points...) correspondent chacune à une bande spectrale différente d'un signal multi-bandes (par exemple de type OFDM) et les hachures (traits obliques, verticaux, horizontaux, ...) correspondent à des contenus différents dans les différentes rafales constituées par cette découpe. On a représenté cinq bandes spectrales, à savoir :
- une première bande spectrale [193 THz ; 193,01 THz] ;
- une deuxième bande spectrale [193,01 THz ; 193,02 THz] ;
- une troisième bande spectrale [193,02 THz ; 193,03 THz] ;
- une quatrième bande spectrale [193,03 THz ; 193,04 THz] ;
- une cinquième bande spectrale [193,04 THz ; 193,05 THz].

On a également représenté trois intervalles (ou « slots ») temporels, à savoir :
- un premier intervalle temporel de 0 à 5 µs ;
- un deuxième intervalle temporel de 5 à 10 µs ;
- un troisième intervalle temporel de 10 à 15 µs.

Dans l'exemple de la figure 1, le quantum de données le plus petit (une bande spectrale, un intervalle temporel) est constitué d'un signal occupant une bande spectrale de 10 GHz et une durée de 4.5 µs.

Ainsi, le canal « multi-bandes OFDM » est découpé dans le temps en intervalles temporels (encore appelés rafales), qui peuvent être de durée variable (entre quelques microsecondes et quelques millisecondes) ; de même, dans le domaine fréquentiel, la rafale voit sa bande spectrale et par conséquent sa capacité de transmission, réduite d'un facteur égal au nombre de bandes constituant le canal multi-bandes OFDM. Le quantum de capacité est alors équivalent à celui que pourrait avoir un paquet optique d'une durée plusieurs fois plus petite que les rafales de la technique de commutation traditionnelle dite « OBS ». Par exemple, le mode de réalisation illustré en figure 1 permet d'obtenir l'équivalent d'une capacité pour un paquet d'une durée de 0,9 µs dans une bande spectrale traditionnelle de 50 GHz.

Il est important de rappeler ici, que la modulation OFDM appliquée à l'optique apporte non seulement une finesse de gestion du spectre dans sa version multi-bandes, mais également la possibilité de s'adapter finement au canal de transmission. En effet, la flexibilité en termes de choix de modulation (débit et format) pour chaque bande OFDM et à l'intérieur du signal OFDM lui-même, offre une multiplicité de combinaisons permettant d'adapter parfaitement la quantité de ressources utilisées à la quantité de données à transporter et aux objectifs de portées (en distance). Il convient aussi de noter qu'un signal multi-bandes OFDM contient plusieurs bandes optiques, chaque bande optique correspondant à une longueur d'onde d'émission d'un laser et pouvant contenir un certain nombre de sous-porteuses électriques (typiquement plusieurs centaines).

La **figure 2** illustre un exemple de répartition possible des données dans les intervalles et les bandes dans un mode de réalisation de l'invention. Ainsi, on peut occuper plusieurs intervalles temporels (i.e. en utilisant plusieurs rafales successives) dans une bande spectrale, comme illustré par le rectangle à trame grisée et à hachures obliques. On peut également avoir une rafale de données répartie sur plusieurs bandes OFDM, comme illustré par le pavé à hachures verticales, regroupant trois rafales mono-bandes respectivement à trames de fond blanche, à pois et à points : ceci permet par exemple la diffusion d'un même contenu à plusieurs destinataires, ainsi que de pouvoir transmettre un débit supérieur de données à ce que pourrait supporter une seule bande OFDM pour un seul destinataire.

Plus généralement, on peut utiliser un quantum de données ou une combinaison de quanta de données selon l'axe temporel et/ou spectral. D'autre part, il est possible d'ajuster le débit à l'intérieur même d'un quantum de données (10 Gbit/s, 25 Gbit/s ou 50 Gbit/s par exemple).

Ainsi, la combinaison des deux domaines, temporel et spectral, permet :
- d'avoir des quanta de données plus petits que dans l'art antérieur (comme ceux de la technique de commutation optique par paquets OPS), sans cependant subir les mêmes contraintes techniques au niveau des composants optiques, notamment en termes de vitesse de traitement ;
- d'avoir un réseau de très grande capacité (grâce aux très grands débits que l'on peut atteindre avec la technique de modulation multi-longueurs d'onde OFDM), avec un accès à une granularité très fine (grâce à l'utilisation de rafales) et une très grande flexibilité dans la gestion de la ressource (débits et formats de modulation variables, possibilité de rafales de durée variable) ;
- l'utilisation des architectures de réseau utilisées pour les solutions SLPSN sans perte (qui sont basées sur le routage en longueur d'onde) avec des noeuds de coeur transparents au débit et au format (sans conversion optique/électrique/optique) et donc économes en consommation énergétique ;
- la réalisation d'architectures pour des réseaux couvrant à la fois le « métro » et le coeur de réseau,
- un plus grand nombre de noeuds sources et/ou destinataires que pour les solutions SLPSN de l'art antérieur (multiplication par un facteur égal au nombre de bandes spectrales possibles), chaque bande pouvant être associée à un noeud destinataire. En outre, un noeud destinataire peut aussi avoir accès à plusieurs bandes spectrales du canal de transmission si elle a besoin de beaucoup de débit.

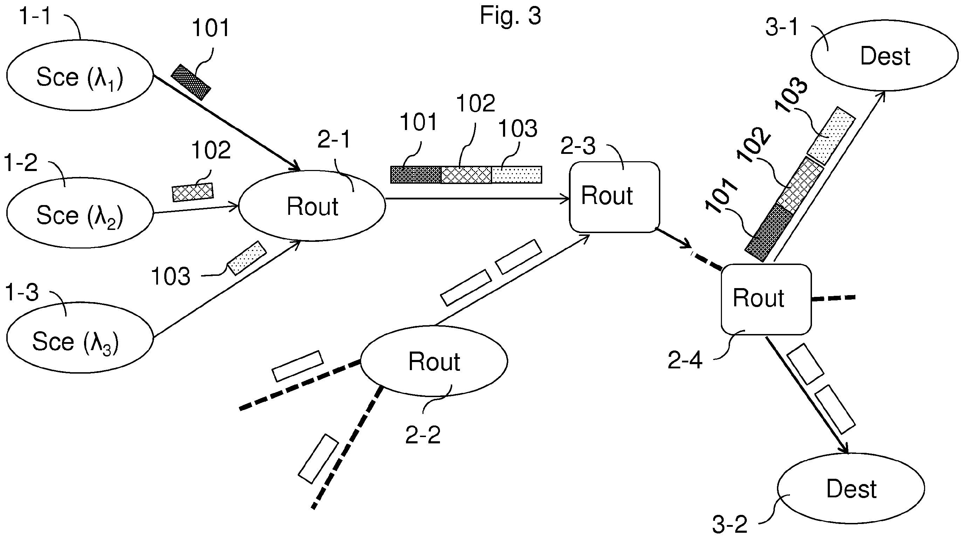

On présente désormais, en relation avec la **figure 3****,** un exemple de réseau optique reposant sur une solution d'accord en longueur d'onde au niveau des noeuds destinataires.

Un tel réseau optique comprend un ensemble de noeuds sources à longueur d'onde fixe, parmi lesquels on a plus particulièrement représenté, à titre d'exemple, des sources référencées 1-1, 1-2, 1-3. Chacune de ces sources émet des rafales optiques de données mono-bande à une longueur d'onde spécifiquement associée à la source, λ₁ étant associée à la source 1-1, λ₂ étant associée à la source 1-2 et λ₃ étant associée à la source 1-3.

Pour une rafale donnée, les données occupent une bande spectrale relativement étroite (inférieure à 10 GHz) recouvrant (typiquement centrée sur) la longueur d'onde λᵢ utilisée pour émettre la rafale, cette bande spectrale présentant avantageusement un profil de forme substantiellement rectangulaire (par exemple avec une pente de flanc supérieure 4 dB/GHz, en particulier comprise entre 4 et 8 dB/GHz) pour optimiser l'occupation spectrale des données. Il peut s'agir en particulier de données modulées au format OFDM (pour « Orthogonal Frequency Division Multiplexing »), de type multi-porteuses ou encore de données modulées au format Nyquist-WDM (généré à partir d'un signal mono-porteuse à fort débit symbole qu'on filtre pour le rendre rectangulaire). Par la suite, l'exemple particulier de la modulation OFDM est utilisé, sans aucun caractère limitatif.

Ainsi, d'un point de vue temporel, la source référencée 1-1 émet une rafale optique mono-bande référencée 101 après que la source référencée 1-2 ait émise une rafale optique mono-bande référencée 102, elle-même émise après l'émission par la source référencée 1-3 d'une rafale optique mono-bande référencée 103, toutes ces rafales étant destinées au même noeud destinataire. On peut parler également ici de « rafales colorées », chaque rafale 101 à 103 présentant des données sur une seule bande distincte des autres, correspondant à une bande spectrale associée à une longueur d'onde spécifique distincte, ces différentes rafales étant associées à des longueurs d'onde distinctes (bien que proches spectralement) et donc colorées différemment, de sorte à ce qu'elles soient vues comme un signal multi-longueurs d'onde (ou multi-bandes) lorsqu'elles sont rassemblées.

Le réseau de la figure 3 comprend également des éléments optiques de routage, référencés 2-1 à 2-4, également appelés noeuds de routage, recevant les rafales optiques émises par les différents noeuds sources du réseau. Ainsi, le noeud de routage 2-1 reçoit les rafales de données mono-bandes 101, 102, 103 en provenance des noeuds sources 1-1 à 1-3, et les combine en une succession de rafales de données (pouvant être appelées « multi-bandes » car émises sur différentes bandes OFDM) transmises en direction d'un noeud de routage suivant (ici le noeud 2-3).

De façon à éviter les collisions des rafales dans le réseau, un plan de commande élaboré est avantageusement mis en oeuvre. Ce plan de commande est constitué par les unités de contrôle des équipements (notamment des noeuds sources), le canal de contrôle qui les interconnecte et les messages échangés sur ce canal de contrôle. Ce plan de commande prend en compte les temps de trajet entre les éléments du réseau, par exemple par mécanisme de synchronisation externe et échange d'estampilles temporelles (« timestamps »), ou par processus dit de « ranging ».

Ce plan de commande met en oeuvre des échanges de messages entre les noeuds sources, les noeuds destinataires et les unités de contrôle pour informer du besoin de communication des noeuds sources, de l'occupation des récepteurs dans les noeuds destinataires ou les noeuds sources. Par exemple, par un envoi périodique de rapports vers l'unité de contrôle (centralisée ou distribuée), les noeuds sources informent de l'état de leurs files d'attente, tandis que les unités de contrôle informent les noeuds sources des dates auxquelles ils peuvent émettre vers les noeuds destinataires. Dans un autre exemple, l'unité de contrôle reçoit une requête de bande passante entre plusieurs éléments du réseau par l'intermédiaire d'un plan de commande d'un équipement client (par exemple requête GMPLS (pour « Generalized Multi-Protocol Label Switching ») provenant de routeurs).

Un tel plan de commande peut être mis en oeuvre dans une unité de contrôle centralisée contrôlant l'ordonnancement des rafales de données à destination de l'ensemble des noeuds destinataires. Une telle unité de contrôle gère toutes les réservations en attribuant à chaque noeud source des ressources à utiliser pour transmettre des rafales de données à une destination quelconque. A titre alternatif, un tel plan de commande peut être mis en oeuvre dans une unité de contrôle distribuée dans le réseau, qui indique aux noeuds sources à quels instants ils doivent émettre, en utilisant un mécanisme de requêtes et d'autorisations (ou « requests » et « grants »). La ou les unité(s) de contrôle, qu'elle(s) soi(en)t centralisée(s) ou distribuée(s), met(tent) en oeuvre des algorithmes de calcul pour déterminer les dates d'émission et de réception et attribuer des autorisations avec des messages d'autorisation d'émission aux noeuds sources.

Ce plan de commande doit avoir connaissance des temps de trajet entre les différents éléments de réseau de façon à décider des moments adéquats pour l'émission des rafales mono-bande OFDM.

Les rafales de données issues des noeuds de routage 2-1 et 2-2 sont ensuite routées dans le réseau jusqu'à d'autres noeuds de routage de rafales multi-bandes, référencés 2-3 et 2-4 qui transmettent ces rafales optiques (par exemple en fonction de leur couleur, i.e. de leurs longueurs d'onde) de sorte à ce que celles-ci se présentent à l'entrée du noeud destinataire auquel elles sont destinées, typiquement sous la forme d'une succession (temporellement parlant) de rafales optiques. Ici, les rafales 101, 102 et 103 sont diffusées par les noeuds de routage 2-3 et 2-4 vers un noeud destinataire référencé 3-1 parmi les différents noeuds destinataires du réseau optique (seuls deux noeuds destinataires référencés 3-1 et 3-2 étant illustrés ici).

On notera que le système illustré en figure 3 peut s'appliquer à un réseau comprenant aussi bien des noeuds de bord (noeuds edge) que des noeuds de coeur de réseau. Les noeuds de bord peuvent contenir une seule source ou plusieurs sources (côté émission) et un récepteur ou plusieurs récepteurs (côté réception) tels qu'illustrés en figure 3, sachant que pour assurer une communication bidirectionnelle les noeuds de bord contiennent une partie émission et une partie réception.

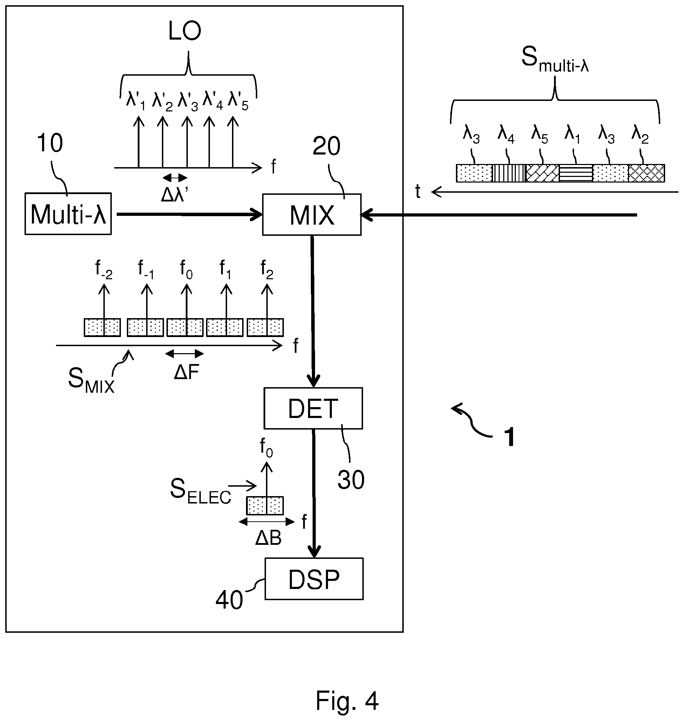

On se réfère à présent à la **figure 4** qui illustre un mode de réalisation du récepteur optique cohérent selon l'invention, capable de recevoir les rafales colorées mono-bandes décrites précédemment.

Sur cette figure 4, le récepteur optique cohérent 1 peut recevoir, en provenance d'un réseau optique tel qu'illustré précédemment, un signal optique multi-longueurs d'onde S_{Multi-λ} composé d'une pluralité de rafales optiques mono-bande, en particulier une succession (du point de vue temporel) de rafales optiques mono-bande. Chaque rafale mono-bande transporte des données sur une bande spectrale ΔF donnée (typiquement d'une largeur de l'ordre de 8 à 9 GHz), par exemple en utilisant la modulation OFDM, cette bande spectrale étant portée par une longueur d'onde (située typiquement au milieu de cette bande) parmi une pluralité de longueurs d'onde dites « porteuses » λ₁ à λ₅ prédéfinies, séparées entre elles d'un écart spectral Δλ assez faible (typiquement de l'ordre de 10 GHz).

Ainsi, de manière purement illustrative, le signal S_{Multi-λ} est illustré comme se composant d'une succession de rafales mono-bandes, en l'occurrence une première rafale constituée d'une bande spectrale portée par la longueur d'onde λ₃, suivie d'une deuxième rafale constituée d'une sous-bande spectrale portée par la longueur d'onde λ₄, suivie d'une troisième rafale constituée d'une sous-bande spectrale portée par la longueur d'onde λ₅, suivie d'une quatrième rafale constituée d'une sous-bande spectrale portée par la longueur d'onde λ₁, suivie d'une cinquième rafale constituée d'une sous-bande spectrale portée (à nouveau) par la longueur d'onde λ₃, suivie d'une sixième rafale constituée d'une sous-bande spectrale portée par la longueur d'onde λ₂, etc.

Le récepteur optique 1 comprend en particulier des moyens de génération optique 10 agencés pour délivrer un oscillateur local optique multi-longueurs d'onde LO composé d'une pluralité de raies optiques à des longueurs d'onde λ'₁ à λ'₅ correspondant respectivement aux longueurs d'onde porteuses λ₁ à λ₅ susmentionnées. Par «correspondant », on entend ici que les longueurs d'onde λ'₁ à λ'₅ des raies optiques sont idéalement les mêmes que les longueurs d'onde λ₁ à λ₅ utilisées pour transmettre les rafales dans le réseau optique, mais qu'il peut aussi y avoir un léger décalage entre chaque longueur d'onde λ'ᵢ de raie et la longueur d'onde λᵢ lui correspondant, ce décalage pouvant être toléré dans une certaine limite (e.g. quelques centaines de MHz, typiquement 300 MHz au maximum) sans que le principe de l'invention ne soit remis en cause. L'écart Δλ' entre les longueurs d'onde λ'₁ à λ'₅ des raies est de préférence identique à l'écart Δλ entre les longueurs d'onde porteuses λ₁ à λ₅, par exemple de l'ordre de 10 GHz. Le décalage entre les longueurs d'onde λ'ᵢ des raies et les longueurs d'onde λᵢ leur correspondant peut éventuellement être contrôlé au moyen d'un référencement des longueurs d'onde utilisées dans le réseau combiné à un mécanisme d'asservissement ad-hoc au niveau du récepteur.

En d'autres termes, de manière plus générale, lorsque N longueurs d'onde λ₁ à λ_{N} sont utilisables pour transmettre des signaux optiques à un récepteur optique donné dans le réseau optique employé, les moyens de génération optique 10 de ce récepteur optique génèrent un oscillateur optique local LO présentant N raies optiques aux longueurs d'onde λ'₁ à λ'_{N} de valeurs identiques aux longueurs d'onde λ₁ à λ_{N}, ou tout le moins très proches de celles-ci (à quelques dizaines de MHz, voire quelques centaines de MHz, près). Plus précisément, les moyens de génération optique 10 génèrent un unique oscillateur optique local LO (i.e. un unique signal optique multi-longueurs d'onde destiné à être transmis sur une seule fibre optique) et non une pluralité d'oscillateurs optiques locaux (i.e. une pluralité de signaux optiques mono-longueur d'onde destinés à être transmis sur plusieurs fibres optiques).

En outre, les raies optiques aux longueurs d'onde prédéfinies λ'₁ à λ'₅ de l'oscillateur local optique LO sont avantageusement générées de telle sorte à présenter chacune une largeur de raie très fine (typiquement inférieure à 400 kHz, préférentiellement comprise entre 50 et 100 kHz), afin d'éviter d'induire du bruit de phase lors de la réception du signal S_{Multi-λ}. A titre d'exemple, ces moyens de génération optique 10 peuvent être implémentés sous la forme d'un laser faible bruit à verrouillage passif de mode (passively mode-locked laser) à puits quantique. Une telle implémentation, intégrée et économiquement peu chère, est en effet susceptible de répondre aux présentes contraintes en termes d'écart spectral entre raies et de bruit de phase, moyennant le fait de figer définitivement l'espacement entre les raies dès la construction du laser (une telle puce laser adresse donc une, et une seule, valeur d'espacement inter-raies).

Le récepteur optique 1 comprend en outre des moyens de mélange optique 20 agencés pour mélanger l'oscillateur optique local LO issu des moyens de génération optique 10 avec le signal optique multi-longueurs d'onde S_{Multi-λ}. En particulier, ces moyens de mélange optique 20 sont agencés pour recevoir deux signaux optiques en entrée, à savoir le signal S_{Multi-λ} et l'unique oscillateur optique local LO, et non une pluralité d'oscillateurs optiques locaux transmis séparément. Il en résulte, en sortie des moyens de mélange optique 20, un signal optique dit « mélangé » S_{MIX} dans lequel, pour chaque rafale successive du signal S_{Multi-λ}, se retrouve les battements optiques entre la rafale optique en question et les raies optiques de l'oscillateur local optique LO multi-longueurs d'onde. Ces moyens de mélange optique 20 sont typiquement constitués d'un hybride optique 90° dont les deux entrées reçoivent respectivement les signaux LO et S_{Multi-λ} et dont les deux sorties fournissent les composantes en phase I et en quadrature Q du signal S_{MIX}.

Sur la figure 4 a été représenté le résultat de ce mélange lors de la réception de la première rafale (portée par la longueur d'onde λ₃). Le mélange de cette rafale optique avec les raies du signal LO génère un signal optique S_{MIX} présentant une série de battements optiques centrés à certaines fréquences particulières f₋₂,f₁,f₀,f_{1,}f₂, qui constituent autant de copies spectrales de la rafale en question (les cinq battements avec chacune des raies λ'ᵢ ont été représentés).

Les fréquences des battements correspondent aux différences entre la longueur d'onde λ₃ porteuse de la première rafale et les longueurs d'onde des raies du signal LO, la fréquence centrale f₀ correspondant ainsi à la différence entre la longueur d'onde λ₃ portant la première rafale et la longueur d'onde λ'₃ (correspondant à longueur d'onde λ₃) de la troisième raie du signal LO, la fréquence f₋₁ correspondant à la différence entre la longueur d'onde λ₃ de la première rafale et la longueur d'onde λ'₄ de la quatrième raie du signal LO, la fréquence f₁ correspondant à la différence entre la longueur d'onde λ₃ de la première rafale et la longueur d'onde λ'₂ de la deuxième raie du signal LO, et ainsi de suite. Idéalement, cette fréquence centrale f₀ est nulle lorsque les longueurs d'onde λ₃ et λ'₃ sont exactement identiques, et donc que les raies du signal LO sont parfaitement calées sur les longueurs d'ondes utilisées pour émettre les rafales, mais il se peut que cette fréquence centrale f₀ soit d'une faible valeur proche de 0 MHz, correspondant alors entre l'écart entre la longueur d'onde λ'₃ de la troisième raie du signal LO et la longueur d'onde λ₃ utilisée pour émettre la première rafale.

Une fois la première rafale mélangée avec l'oscillateur local optique LO, la deuxième rafale est ensuite mélangée avec ce même signal LO, fournissant alors un signal optique mélangé S_{MIX} composé de nouveaux battements optiques, et ainsi de suite.

Le récepteur optique 1 comprend en outre des moyens de détection optique 30 recevant depuis les moyens de mélange optique 20 le signal optique mélangé S_{MIX} composé pour chaque rafale optique des battements optiques ci-dessus.

Ces moyens de détection optique 30 ont pour première fonction de convertir le signal optique reçu en un signal électrique pouvant être traité par des moyens de traitement 40 classiques, implémentés typiquement sous la forme d'un processeur numérique de traitement de signal (DSP pour Digital Signal Processing).

En outre, dans le présent mode de réalisation, ces moyens de détection 30 présentent une certaine bande passante ΔB de traitement, convertissant et laissant passer les signaux au sein de cette bande passante alors qu'ils rejettent les signaux en dehors de cette bande passante. Cette bande passante est ici réglée pour laisser passer un ou plusieurs battements pertinents dans le signal S_{MIX}, en particulier le battement entre la rafale optique mono-bande portée par la longueur d'onde λᵢ et la raie optique à la longueur d'onde λ'ᵢ correspondant (i.e. identique ou très proche) à cette longueur d'onde λᵢ, situé spectralement autour de la fréquence centrale f₀ dans le signal optique mélangé S_{MIX}.

Avantageusement, cette bande passante peut être réglée pour ne laisser que le seul battement autour de la fréquence centrale f₀ afin d'ignorer les autres battements résultant du mélange entre la rafale optique et des raies de l'oscillateur local optique LO à des longueurs d'onde différentes et éloignées de la porteuse de cette rafale optique, ce cas étant particulièrement approprié lorsqu'une seule rafale optique mono-bande est reçue par intervalle de temps donné.

Pour ce faire, la bande passante ΔB des moyens de détection 30 est agencée en fonction de la bande spectrale ΔF occupée par le ou les battement(s) à conserver au sein du signal S_{MIX}. Cette bande passante ΔB pourra ainsi prendre l'une des formes suivantes selon que l'on filtre le signal S_{MIX} dans le domaine optique ou électrique, voire dans les deux domaines successivement :
- Lorsque la bande passante ΔB des moyens de détection 30 est définie comme correspondant à la bande passante optique de traitement d'un module optique au sein des moyens de détection 30 (par exemple la bande passante d'un module de conversion photo-électrique ou celle d'un filtre optique situé en amont d'un tel module de conversion, voire de l'ensemble de ces modules), le filtrage se fait dans le domaine optique et la bande passante ΔB présente alors avantageusement une largeur légèrement supérieure à celle de la bande spectrale ΔF du battement optique à conserver (par exemple une largeur de bande ΔB de 10 GHz pour une largeur spectrale optique ΔF d'environ 8 GHz pour une rafale mono-bande). Les moyens de détection agissent alors comme un filtre passe-bande centré sur la bande spectrale du battement à conserver.
- Lorsque la bande passante ΔB des moyens de détection 30 est définie comme correspondant à la bande passante électrique de traitement d'un module électrique au sein des moyens de détection 30 (par exemple la bande passante d'un amplificateur électronique en sortie d'un module de conversion photo-électrique, d'un module de conversion analogique-numérique ou encore d'un module traitement numérique en aval d'un tel module de conversion, voire de l'ensemble de ces modules), le filtrage se fait dans le domaine électrique et la bande passante ΔB présente alors avantageusement une largeur légèrement supérieure à la demi-largeur de la bande spectrale ΔF du battement optique à conserver (par exemple une largeur de bande ΔB de 5 GHz pour une largeur spectrale optique ΔF d'environ 8 GHz pour une rafale mono-bande). Cette bande passante ΔB étant bornée par la fréquence nulle dans la mesure où ce type de module électrique fonctionne en bande de base, les moyens de détection agissent alors comme un filtre passe-bas.

Lorsque des intervalles de garde d'une certaine largeur (par exemple 1 GHz, voire moins) séparent les bandes spectrales portées par les rafales optique mono-bandes, la largeur ΔB de la bande passante requise peut être choisie de sorte à être proche de la demi-somme de la largeur de la bande spectrale de la rafale considérée et de la largeur des intervalles spectraux de garde l'entourant, par exemple une largeur ΔB comprise entre 4 et 5 GHz (définie pour un module électrique et un filtrage dans le domaine électrique tel que présenté précédemment) lorsque la rafale présente une bande spectrale de largeur inférieure ou égale à 8 GHz avec des intervalles de garde de largeur supérieure ou égale à 1 GHz. Ainsi, un seul battement est filtré, sans que des composantes appartenant à d'autres battements adjacents ne le soient.

Ainsi, pour chaque rafale mono-bande reçue, les moyens de détection 30 fournissent aux moyens de traitement 40 un signal électrique S_{ELEC} correspondant à la conversion optique-électrique du battement optique centré sur la fréquence f₀ obtenu pour cette rafale (ce signal S_{ELEC} pouvant être uniquement constitué de ce battement), cette opération étant réitérée pour chaque rafale successive. Les moyens de traitement 40 peuvent alors traiter ce signal électrique de manière classique (démodulation, décodage, etc.).

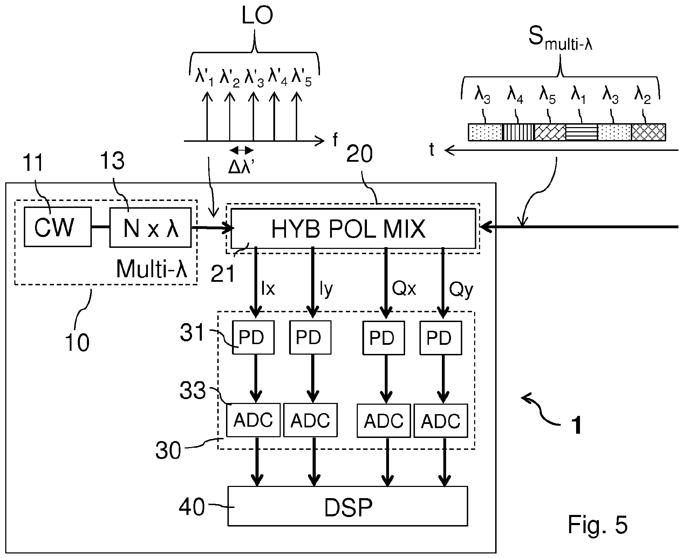

On se réfère à présent à la **figure 5** qui illustre une variante plus spécifique du premier mode de réalisation du récepteur optique selon l'invention, capable de recevoir les rafales colorées mono-bandes décrites précédemment.

Dans cet exemple est illustrée une variante des moyens de génération optique 10 dans laquelle ceux-ci comportent une source optique 11 qui génère un signal optique à longueur d'onde continue (CW pour « Continuous Wavelength » en anglais). Il peut s'agir notamment d'un laser à cavité externe à faible largeur de raie spectrale (de 50 à 100 kHz).

Les moyens de génération optique 10 comportent également un module de génération multi-longueurs d'onde 13 agencé pour délivrer, à partir du signal optique à longueur d'onde continue reçu de la source optique 11, le signal optique multi-longueurs d'onde local présentant des raies optiques aux longueurs d'onde λ'₁ à λ'₅.

Ce module de génération multi-longueurs d'onde 13 peut par exemple être constitué d'un modulateur Mach-Zehnder (MZM), commandé par un signal RF de très forte puissance à une fréquence égale à l'espacement Δλ' entre les raies optiques de l'oscillateur optique local à générer (Δλ'=10 GHz par exemple, si les porteuses utilisées pour transmettre les rafales présentent cet écart spectral). Un tel modulateur Mach-Zehnder peut notamment être du type de ceux discutés dans les articles "Ultra-flat optical frequency comb generator using a single-driven dual-parallel Mach-Zehnder modulator" de Qiang Wang et al (Optics Letters, Vol. 39, No. 10, 2014) ou encore « "Asymptotic formalism for ultraflat optical frequency comb génération using a Mach-Zehnder modulator » de Takahide Sakamoto et al. (Optics Letters, Vol. 32, No. 11, 2007).

Alternativement, ce module de génération multi-longueurs d'onde 13 peut être implémenté sous la forme d'un modulateur de phase inséré dans une cavité Fabry-Pérot alimentée par le signal continu CW issu de la source optique 11, par exemple du type de celui discuté dans l'article "Low-noise and broadband optical frequency comb génération based on an optoelectronic oscillator" de Xiaopeng Xie et al. (Optics Letters, Vol. 39, No. 4, 2014).

Le modulateur de phase est commandé par une tension RF à une fréquence égale à un multiple de l'intervalle spectral libre de la cavité Fabry-Pérot. Cette tension RF peut être générée par photo-détection du signal optique oscillant dans la cavité Fabry-Pérot. Ainsi, en ajustant la longueur de la cavité Fabry-Pérot, et donc la fréquence de la tension RF appliquée au modulateur de phase, on peut régler l'espacement Δλ' entre les raies du signal LO de sorte à ce qu'il corresponde à l'espacement Δλ entre les longueurs d'onde porteuses utilisées pour les rafales colorées.

En outre, dans cet exemple de la figure 5, les moyens de mélange optique 20 comportent un module hybride optique à diversité de polarisation 21 lequel décompose chaque signal optique résultant du mélange entre le signal LO et une des rafales du signal multi-longueurs d'onde reçu S_{Multi-λ} en quatre composantes optiques Ix, ly, Qx et Qy correspondant aux deux polarisations X et Y du signal reçu et aux deux composantes en phase I et en quadrature Q. Deux modules hybrides 90° (un par polarisation) peuvent ici être employés.

Chacune des quatre composantes optiques Ix, ly, Qx et Qy présente alors une certaine série de battements optiques, durant une durée temporelle très courte correspondant à une rafale donnée, et est traitée par des moyens de détection 30 qui lui sont spécifiques.

Dans l'exemple de la figure 5, ces moyens de détection 30 se composent, pour chaque composante à recevoir, d'un module de conversion optique-électrique 31 suivi d'un module de conversion analogique-numérique 33 (ADC pour « Analog-Digital Converter »). Le module de conversion optique-électrique 31 (typiquement une photodiode) a pour fonction de passer la composante optique reçue en la convertissant dans le domaine électrique. Le module de conversion analogique-numérique 33 a pour fonction de numériser le signal électrique converti fourni par le module de conversion optique-électrique 31, afin de permettre son traitement ultérieur dans le module de traitement 40.

Dans cet exemple, la bande passante des moyens de détection 30 est définie par la fréquence de coupure haute du module de conversion optique-électrique 31 et du module de conversion analogique-numérique 33. La largeur de la bande passante ΔB des moyens de détection 30 peut alors être ajustée en réglant cette fréquence de coupure, par exemple en choisissant des composants ADC avec une fréquence de coupure de 5 GHz, ou en réglant la fréquence de coupure de tels composants ADC sur 5 GHz, si l'on souhaite filtrer les battements dans une bande spectrale optique de 10 GHz.

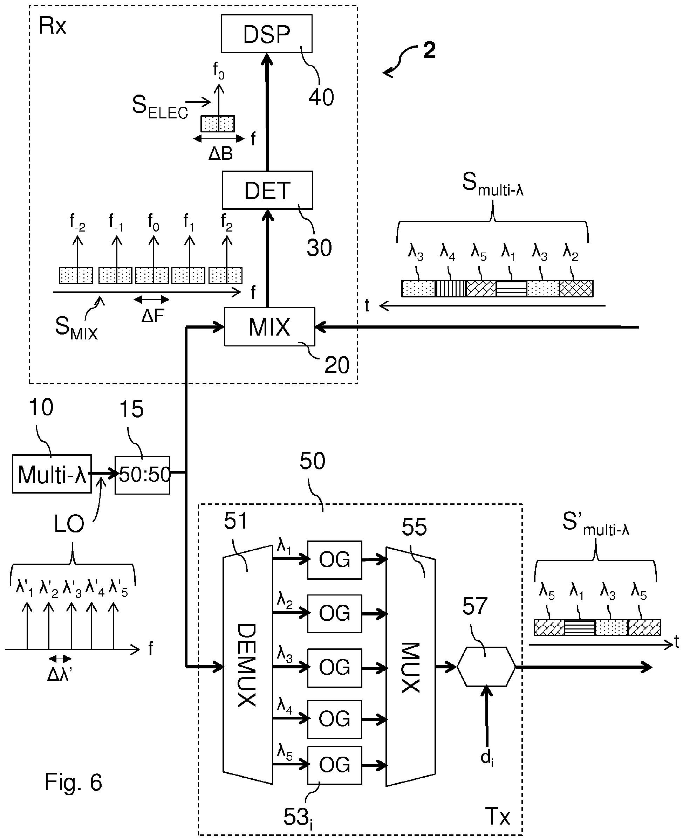

On se réfère à présent à la **figure 6** qui illustre un mode de réalisation d'un émetteur-récepteur optique selon l'invention, capable de recevoir et d'émettre des rafales colorées multi-bandes telles que décrites précédemment.

Dans cet émetteur-récepteur optique 2, la partie « réception » (désignée par « Rx ») comprend les moyens 20, 30 et 40 du récepteur tel que décrit précédemment, tandis que la partie « émission » (désignée par « Tx ») comprend des moyens d'émission 50 qui seront décrits par la suite, ces deux parties mutualisant l'utilisation des moyens de génération optique 10 afin de pouvoir utiliser l'oscillateur local optique multi-longueurs LO aussi bien en émission qu'en réception.

Cet émetteur-récepteur optique 2 comprend ainsi tout d'abord des moyens de génération optique 10 générant un oscillateur local optique multi-longueurs d'onde LO, composé d'une pluralité de raies optiques à des longueurs d'onde λ₁ à λ₅. L'émetteur-récepteur 2 comprend en outre un diviseur optique 15 (tel qu'un coupleur 50:50) divisant l'oscillateur local LO en deux signaux optiques identiques (mais de puissance optique réduite) destinés à alimenter respectivement la partie « réception » et la partie « émission » de l'émetteur-récepteur 2.

Ainsi, une première partie de l'oscillateur local LO (en l'occurrence le premier signal optique en sortie du diviseur optique 15) est fournie aux moyens de mélange optique 20 de la partie « réception », afin de pouvoir se mélanger avec un signal optique multi-longueurs d'onde S_{Multi-λ} reçu par l'émetteur-récepteur 2 en provenance d'un réseau optique, la (ou les) composante(s) résultant de ce mélange étant détectée(s) par des moyens de détection 30, puis traitée(s) électriquement par des moyens de traitement 40 de la manière décrite précédemment.

Une deuxième partie de l'oscillateur local LO (en l'occurrence le deuxième signal optique en sortie du diviseur optique 15) est fournie au moyens d'émission 50 afin de permettre l'émission d'un signal optique multi-longueurs d'onde S'_{Multi-λ} composé d'une succession de rafales optiques mono-bandes portées chacune par une longueur d'onde longueur λᵢ parmi les longueurs d'onde prédéfinies λ₁ à λ₅.

Ces moyens d'émission 50 comprennent notamment un démultiplexeur optique 51 dont l'entrée reçoit le deuxième signal optique en sortie du diviseur optique 15 (présentant des raies optiques aux longueurs d'onde λ₁ à λ₅) et disposant de N sorties (ici N=5) sur chacune desquelles il délivre séparément les raies optiques aux longueurs d'onde λ₁ à λ₅.

Ces moyens d'émission 50 comprennent en outre N portes optiques 53ᵢ (ou OG pour « optical gates »), pouvant être intégrées dans un circuit intégré photonique (PIC pour « Photonic Integrated Circuit »), connectées respectivement aux N sorties du démultiplexeur optique 51 (lui-même pouvant être intégré au circuit intégré précédent), chaque porte optique 53ᵢ ne traitant ainsi qu'une seule raie optique à une longueur d'onde donnée. Les sorties des N portes optiques 53ᵢ sont connectées aux N entrées d'un multiplexeur optique 55 (lui-même pouvant être intégré au circuit intégré précédent), lequel délivre en sortie un signal optique combinant spectralement les raies optiques éventuellement présentes en sortie de ces portes optiques.

En opération, dans la mesure où le module de génération optique 10 fournit un signal multi-longueurs d'onde continu au démultiplexeur 51 qui les démultiplexe vers les N portes optiques 53ᵢ, ces portes optiques 53ᵢ reçoivent chacune en continu une raie optique à une longueur d'onde particulière du signal multi-longueurs d'onde. Il suffit qu'une seule de ces portes soit passante alors que toutes les autres sont bloquantes, pendant un laps de temps suffisamment court (de l'ordre de quelques µs), pour obtenir en sortie du multiplexeur optique 55 une rafale d'une courte durée portée par la longueur d'onde de la raie optique traitée par la seule porte optique 53ᵢ passante. L'accordabilité (correspondant au changement de longueur d'onde d'une rafale à la suivante) est ainsi assurée par le contrôle du changement de porte passante (parmi les N portes optiques 53ᵢ), d'une première porte optique associée à une première longueur d'onde à utiliser pour une rafale courante à une deuxième porte optique associée à une deuxième longueur d'onde à utiliser pour la rafale suivante. Ce contrôle peut être géré par un contrôleur commun (non illustré) contrôlant l'ouverture et la fermeture des différentes portes optiques 53ᵢ afin de ne laisser passer qu'une composante de longueur d'onde différente d'une rafale à une autre.

Le signal optique en sortie du multiplexeur optique 55 est alors fourni à un modulateur optique 57, lequel module les rafales optiques successives de ce signal optique avec des données électriques dᵢ à transmettre afin d'obtenir le signal optique S'_{Multi-λ} à transmettre dans un réseau optique, ce modulateur pouvant être un modulateur complexe PDM-CMZM (pour « Polarization Division Multiplexed - Complex Mach-Zehnder Modulator »), capable de fournir une modulation complexe de type QAM (pour « Quadrature Amplitude Modulation ») sur les deux polarisations de la lumière pouvant permettre la variation du débit transporté par les sous-bandes optiques portées par chaque rafale.

Ici, de manière purement illustrative, le signal S'_{Multi-λ} est illustré comme se composant d'une première rafale portée par la longueur d'onde λ₅, suivie d'une deuxième rafale portée par la longueur d'onde λ₁, suivie d'une troisième rafale portée par la longueur d'onde λ₃, suivie d'une quatrième rafale portée (à nouveau) par la longueur d'onde λ₅. Ceci correspond à l'ouverture pendant un premier intervalle de temps très court de la porte optique 53₅ (combinée à la fermeture des autres portes optiques), suivie de l'ouverture pendant un deuxième intervalle de temps très court de la porte optique 53₁ (combinée à la fermeture de la porte 53₅, les autres portes étant déjà fermées), suivie de l'ouverture pendant un troisième intervalle de temps très court de la porte optique 53₃ (combinée à la fermeture de la porte 53₁, les autres portes étant déjà fermées), suivie de l'ouverture pendant un quatrième intervalle de temps très court de la porte optique 53₅ (combinée à la fermeture de la porte 53₃, les autres portes étant déjà fermées), et ainsi de suite, ces opérations étant commandées et synchronisées par un contrôleur commun aux portes optiques 53ᵢ. Ce contrôleur commun peut en particulier appartenir au plan de commande évoqué précédemment.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

En particulier, comme déjà indiqué, le format de modulation des données dans les bandes occupées par les rafales ne se limite pas à l'OFDM, mais peut aussi être une modulation Nyquist-WDM ou tout autre format de modulation permettant une occupation optimale d'une bande spectrale réduite, en particulier avec un profil d'occupation sensiblement rectangulaire.

D'autre part, le récepteur cohérent a été illustré précédemment dans le cas particulier d'une succession de rafales ne se chevauchant pas temporellement, sans qu'il ne se limite nécessairement à cette situation particulière.

Enfin, bien qu'un réseau avec des noeuds sources utilisant des émetteurs optiques à longueur d'onde fixe ait été illustré en détail, l'invention ne se limite pas à ce seul type de réseau et le récepteur optique cohérent ci-avant peut être aussi utilisé dans des noeuds destinataires d'un réseau optique comprenant des noeuds sources avec des émetteurs optiques à longueur d'onde accordable.

## Revendications

1. Récepteur optique cohérent (1) apte à recevoir un signal optique multi-longueurs d'onde (S_{Multi-λ}) composé au moins d'une succession de rafales optiques mono-bandes, chaque rafale optique mono-bande étant portée par une longueur d'onde distincte parmi une pluralité de longueurs d'onde porteuses (λ₁, λ₂, λ₃, λ₄, λ₅) sur une bande spectrale déterminée, le récepteur optique comprenant :
des moyens de génération optique (10) agencés pour délivrer un unique oscillateur local optique multi-longueurs d'onde (LO) composé d'une pluralité de raies optiques à des longueurs d'onde (λ'₁, λ'₂, λ'₃, λ'₄, λ'₅) correspondant aux longueurs d'onde porteuses ;
des moyens de mélange optique (20) agencés pour recevoir deux signaux optiques en entrée, le premier desdits signaux optiques étant l'unique oscillateur local optique multi-longueurs d'onde (LO) et le deuxième desdits signaux optiques étant le signal optique multi-longueurs d'onde (S_{Multi-λ}), afin de délivrer au moins un signal optique (S_{MIX}), dit signal optique mélangé, composé d'une pluralité de battements entre chacune des rafales optiques mono-bandes du signal optique multi-longueurs d'onde (S_{Multi-λ}) et les raies optiques de l'unique oscillateur local optique multi-longueurs d'onde ; et
des moyens de détection (30) comprenant un module de conversion photo-électrique (31) suivi d'au moins un module électrique traitant le signal optique mélangé après conversion dans le module de conversion photo-électrique, en particulier un module de conversion analogique-numérique (33) et/ou un module de traitement numérique ;
la bande passante (ΔB) des moyens de détection correspondant à la bande passante du module électrique et présentant une largeur spectrale supérieure à la demi-largeur de la bande spectrale de ladite au moins une rafale optique mono-bande, de sorte à filtrer, à partir du signal optique mélangé, au moins un battement entre chacune des rafales optiques mono-bande et une des raies optiques de l'oscillateur local optique multi-longueurs d'onde, en ne laissant passer, pour chaque rafale optique mono-bande, que le battement entre ladite rafale optique mono-bande et la raie optique de longueur d'onde (λ'₃) correspondant à la longueur d'onde (λ₃) portant ladite rafale optique mono-bande, tout en rejetant les battements entre ladite rafale optique mono-bande et les autres raies optiques de longueur d'onde ne correspondant pas à la longueur d'onde (λ₃) portant ladite rafale optique mono-bande.

2. Récepteur optique cohérent selon l'une des revendications 1, dans lequel les moyens de génération optique (10) comprennent une source optique (11) générant un signal optique à longueur d'onde continue et un module de génération multi-longueurs d'onde (13) agencé pour délivrer, à partir du signal optique à longueur d'onde continue reçu de la source optique, l'oscillateur local optique multi-longueurs d'onde.

3. Récepteur optique cohérent selon la revendication 2, dans lequel la source optique (11) génère un signal optique de largeur de raie spectrale inférieure à 400 kHz, en particulier de largeur de raie spectrale égale à 100 kHz.

4. Récepteur optique cohérent selon l'une des revendications 1 à 3, dans lequel les moyens de détection (30) comprennent au moins un module optique, en particulier un filtre optique et/ou un module de conversion photo-électrique (31), la bande passante (ΔB) des moyens de traitement correspondant à la bande passante du module optique et présentant une largeur spectrale supérieure à la largeur de la bande spectrale de ladite au moins une rafale optique mono-bande.

5. Récepteur optique cohérent selon la revendication 4, dans lequel :
la bande passante des moyens de détection recouvre au moins une fréquence centrale (f_{c}) égale à la différence entre la longueur d'onde portant ladite au moins une rafale optique mono-bande et la longueur d'onde de la raie optique correspondant à ladite longueur d'onde porteuse, en particulier une fréquence centrale nulle.

6. Récepteur optique cohérent selon l'une des revendications 4 ou 5, dans lequel les bandes spectrales des rafales optiques mono-bandes sont séparées par un intervalle spectral de garde et où la largeur de la bande passante des moyens de détection est inférieure à la demi-somme de la largeur de la bande spectrale d'une des rafales mono-bandes et des largeurs des intervalles spectraux de garde l'entourant.

7. Récepteur optique cohérent selon la revendication 6, dans lequel la largeur de la bande spectrale des rafales optiques mono-bande est inférieure ou égale à 8 GHz et où la largeur des intervalles spectraux de garde est supérieure ou égale à 1 GHz et où la largeur de la bande passante des moyens de détection est comprise entre 4 et 5 GHz.

8. Emetteur-récepteur optique (2) apte à recevoir un premier signal optique multi-longueurs d'onde (S_{Muiti-λ}) et à émettre un deuxième signal optique multi-longueurs d'onde (S'_{Multi-λ}) composés d'une succession de rafales optiques mono-bande, chaque rafale optique mono-bande étant portée par une longueur d'onde distincte parmi une pluralité de longueurs d'onde porteuses (λ₁, λ₂, λ₃, λ₄, λ₅) sur une bande spectrale déterminée, l'émetteur-récepteur optique comprenant :
un récepteur optique cohérent selon l'une des revendications 1 à 7 ; et
des moyens d'émission (50) agencés pour recevoir au moins une partie de l'oscillateur local optique multi-longueurs d'onde (LO) généré par le récepteur optique cohérent et générer le deuxième signal optique multi-longueurs d'onde (S'_{Multi-λ}) au moyen de ladite au moins une partie dudit oscillateur local optiquel multi-longueurs d'onde (LO).

9. Emetteur-récepteur optique (2) selon la revendication 8, dans lequel les moyens d'émission (50) comprennent :
un démultiplexeur optique (51) agencé pour séparer ladite au moins une partie de l'oscillateur optique local multi-longueurs d'onde (LO) en une pluralité de signaux optiques mono-longueur d'onde correspondant auxdites raies optiques ;
une pluralité de portes optiques (53ᵢ) recevant respectivement lesdits signaux optiques correspondant auxdites raies optiques,
un multiplexeur optique (55) combinant les sorties desdites portes optiques ; et
un modulateur optique (57) agencé pour moduler, sur une largeur de bande spectrale déterminée, le signal optique en sortie du multiplexeur optique avec des données (dᵢ) à transmettre.

10. Procédé de réception cohérente d'un signal optique multi-longueurs d'onde (S_{Multi-λ}) dans un réseau optique, ledit signal optique multi-longueurs d'onde étant composé d'une succession de rafales optiques mono-bandes, chaque rafale optique mono-bande étant portée par une longueur d'onde distincte parmi une pluralité de longueurs d'onde porteuses (λ₁, λ₂, λ₃, λ₄, λ₅) sur une bande spectrale déterminée, le procédé comprenant les étapes suivantes :
générer un unique oscillateur local optique multi-longueurs d'onde (LO) composé d'une pluralité de raies optiques à des longueurs d'onde (λ'₁, λ'₂, λ'₃, λ'₄, λ'₅) correspondant aux longueurs d'onde porteuses (λ₁, λ₂, λ₃, λ₄, λ₅);
mélanger l'unique oscillateur local optique multi-longueurs d'onde (LO) et le signal optique multi-longueurs d'onde (S_{Multi-λ}) afin de délivrer au moins un signal optique (S_{MIX}), dit signal optique mélangé, composé d'une pluralité de battements entre chacune desdites rafales optiques mono-bandes et les raies optiques de l'unique oscillateur local optique multi-longueurs d'onde; et
filtrer, à partir du signal optique mélangé, au moins un battement entre chacune des rafales optiques mono-bande et une des raies optiques de l'oscillateur local optique multi-longueurs d'onde, en ne laissant passer, pour chaque rafale optique mono-bande, que le battement entre ladite rafale optique mono-bande et la raie optique de longueur d'onde (λ'₃) correspondant à la longueur d'onde (λ₃) portant ladite rafale optique mono-bande, tout en rejetant les battements entre ladite rafale optique mono-bande et les autres raies optiques de longueur d'onde ne correspondant pas à la longueur d'onde (λ₃) portant ladite rafale optique mono-bande.

11. Procédé de réception cohérente selon la revendication 10, dans lequel les étapes de mélange et de filtrage sont répétées itérativement pour chaque rafale optique mono-bande successive composant le signal optique multi-longueurs d'onde.

12. Réseau optique comprenant au moins un récepteur optique cohérent (1) selon l'une des revendications 1 à 7 et/ou un émetteur-récepteur optique (2) selon l'une des revendications 8 ou 9.

## Patentansprüche

1. Kohärenter optischer Empfänger (1), der geeignet ist, ein optisches Mehrwellenlängensignal (S_{Multi-λ}) zu empfangen, das aus mindestens einer Folge von einzelbandigen optischen Bursts besteht, wobei jeder einzelbandige optische Burst von einer unterschiedlichen Wellenlänge unter einer Mehrzahl von Trägerwellenlängen (λ₁, λ₂, λ₃, λ₄, λ₅) über ein bestimmtes Spektralband getragen wird, wobei der optische Empfänger umfasst:
Mittel zur optischen Erzeugung (10), die dazu ausgebildet sind, einen einzigen optischen Mehrwellenlängen-Lokaloszillator (LO) auszugeben, der aus einer Mehrzahl von optischen Linien mit Wellenlängen (λ'₁, λ'₂, λ'₃, λ'₄, λ'₅) besteht, die den Trägerwellenlängen entsprechen;
Mittel zum optischen Mischen (20), die dazu ausgebildet sind, zwei optische Signale im Eingang zu empfangen, wobei das erste der optischen Signale der einzige optische Mehrwellenlängen-Lokaloszillator (LO) ist und wobei das zweite der optischen Signale das optische Mehrwellenlängensignal (S_{Multi-λ}) ist, um mindestens ein optisches Signal (S_{MIX}), gemischtes optisches Signal genannt, auszugeben, das aus einer Mehrzahl von Überlagerungen zwischen jedem der einzelbandigen optischen Bursts des optischen Mehrwellenlängensignals (S_{Multi-λ}) und den optischen Linien des einzigen optischen Mehrwellenlängen-Lokaloszillators besteht; und
Detektionsmittel (30), die ein fotoelektrisches Wandlermodul (31) umfassen, auf das mindestens ein elektrisches Modul folgt, welches das gemischte optische Signal nach der Umwandlung im fotoelektrischen Wandlermodul verarbeitet, insbesondere ein Analog-Digital-Wandlermodul (33) und/oder ein digitales Verarbeitungsmodul;
wobei das Durchlassband (ΔB) der Detektionsmittel dem Durchlassband des elektrischen Moduls entspricht und eine spektrale Breite aufweist, die größer als die halbe Breite des Spektralbandes des mindestens einen einzelbandigen optischen Bursts ist, so dass, ausgehend von dem gemischten optischen Signal, mindestens eine Überlagerung zwischen jedem der einzelbandigen optischen Bursts und einer der optischen Linien des optischen Mehrwellenlängen-Lokaloszillators gefiltert wird und, für jeden einzelbandigen optischen Burst, nur die Überlagerung zwischen dem einzelbandigen optischen Burst und der optischen Linie mit der Wellenlänge (λ'₃), die der Wellenlänge (λ3) entspricht, die den einzelbandigen optischen Burst trägt, durchgelassen wird, und gleichzeitig die Überlagerungen zwischen dem einzelbandigen optischen Burst und den anderen optischen Linien mit einer Wellenlänge, die nicht der Wellenlänge (λ₃) entspricht, die den einzelbandigen optischen Burst trägt, zurückgewiesen werden.

2. Kohärenter optischer Empfänger nach einem der Ansprüche 1, bei dem die Mittel zur optischen Erzeugung (10) eine optische Quelle (11) umfassen, die ein optisches Signal mit kontinuierlicher Wellenlänge erzeugt, und ein Modul zur Mehrwellenlängen-Erzeugung (13), das dazu ausgebildet ist, ausgehend von dem optischen Signal mit kontinuierlicher Wellenlänge, das von der optischen Quelle empfangen wird, den optischen Mehrwellenlängen-Lokaloszillator auszugeben.

3. Kohärenter optischer Empfänger nach Anspruch 2, bei dem die optische Quelle (11) ein optisches Signal mit einer spektralen Linienbreite von weniger als 400 kHz, insbesondere mit einer spektralen Linienbreite von 100 kHz erzeugt.

4. Kohärenter optischer Empfänger nach einem der Ansprüche 1 bis 3, bei dem die Detektionsmittel (30) mindestens ein optisches Modul umfassen, insbesondere ein optisches Filter und/oder ein fotoelektrisches Wandlermodul (31), wobei das Durchlassband (ΔB) der Verarbeitungsmittel dem Durchlassband des optischen Moduls entspricht und eine spektrale Breite aufweist, die größer als die Breite des Spektralbandes des mindestens einen einzelbandigen optischen Bursts ist.

5. Kohärenter optischer Empfänger nach Anspruch 4, bei dem:
das Durchlassband der Detektionsmittel mindestens eine zentrale Frequenz (f_{c}) abdeckt, die gleich der Differenz zwischen der Wellenlänge, die den mindestens einen einzelbandigen optischen Burst trägt, und der Wellenlänge der optischen Linie, die der Trägerwellenlänge entspricht, ist, insbesondere eine zentrale Frequenz von null.

6. Kohärenter optischer Empfänger nach einem der Ansprüche 4 oder 5, bei dem die Spektralbänder der einzelbandigen optischen Bursts durch ein spektrales Schutzintervall getrennt sind und bei dem die Breite des Durchlassbandes der Detektionsmittel geringer ist als die halbe Summe aus der Breite des Spektralbandes eines der einzelbandigen Bursts und den Breiten der es umgebenden spektralen Schutzintervalle.

7. Kohärenter optischer Empfänger nach Anspruch 6, bei dem die Breite des Spektralbandes der einzelbandigen optischen Bursts kleiner als oder gleich 8 GHz ist und bei dem die Breite der spektralen Schutzintervalle größer als oder gleich 1 GHz ist und bei dem die Breite des Durchlassbandes der Detektionsmittel zwischen 4 und 5 GHz beträgt.

8. Optischer Sender-Empfänger (2), der geeignet ist, ein erstes optisches Mehrwellenlängensignal (S_{Multi-λ}) zu empfangen und ein zweites optisches Mehrwellenlängensignal (S'_{Multi-λ}) zu senden, die aus einer Folge von einzelbandigen optischen Bursts bestehen, wobei jeder einzelbandige optische Burst von einer unterschiedlichen Wellenlänge unter einer Mehrzahl von Trägerwellenlängen (λ₁, λ₂, λ₃, λ₄, λ₅) über ein bestimmtes Spektralband getragen wird, wobei der optische Sender-Empfänger umfasst:
einen kohärenten optischen Empfänger nach einem der Ansprüche 1 bis 7; und
Sendemittel (50), die dazu ausgebildet sind, mindestens einen Teil des optischen Mehrwellenlängen-Lokaloszillators (LO), der von dem kohärenten optischen Empfänger erzeugt wird, zu empfangen und das zweite optische Mehrwellenlängensignal (S'_{Multi-λ}) mittels des mindestens einen Teils des optischen Mehrwellenlängen-Lokaloszillators (LO) zu erzeugen.

9. Optischer Sender-Empfänger (2) nach Anspruch 8, bei dem die Sendemittel (50) umfassen:
einen optischen Demultiplexer (51), der dazu ausgebildet ist, den mindestens einen Teil des optischen Mehrwellenlängen-Lokaloszillators (LO) in eine Mehrzahl von optischen Einzelwellenlängensignalen zu splitten, die den optischen Linien der entsprechen;
eine Mehrzahl von optischen Gattern (53i), die jeweils die optischen Signale empfangen, die den optischen Linien entsprechen,
einen optischen Multiplexer (55), der die Ausgänge der optischen Gatter kombiniert; und
einen optischen Modulator (57), der dazu ausgebildet ist, über eine bestimmte Spektralbandbreite, das optische Signal im Ausgang des optischen Multiplexers mit zu übertragenden Daten (dᵢ) zu modulieren.

10. Verfahren zum kohärenten Empfangen eines optischen Mehrwellenlängensignals (S_{Multi-λ}) in einem optischen Netzwerk, wobei das optische Mehrwellenlängensignal aus einer Folge von einzelbandigen optischen Bursts besteht, wobei jeder einzelbandige optische Burst von einer unterschiedlichen Wellenlänge unter einer Mehrzahl von Trägerwellenlängen (λ₁, λ₂, λ₃, λ₄, λ₅) über ein bestimmtes Spektralband getragen wird, wobei das Verfahren die folgenden Schritte umfasst:
Erzeugen eines einzigen optischen Mehrwellenlängen-Lokaloszillators (LO), der aus einer Mehrzahl von optischen Linien mit Wellenlängen (λ'₁, λ'₂, λ'₃, λ'₄, λ'₅) besteht, die den Trägerwellenlängen (λ₁, λ₂, λ₃, λ₄, λ₅) entsprechen;
Mischen des einzigen optischen Mehrwellenlängen-Lokaloszillators (LO) und des optischen Mehrwellenlängensignals (S_{Multi-λ}), um mindestens ein optisches Signal (S_{MIX}), gemischtes optisches Signal genannt, auszugeben, das aus einer Mehrzahl von Überlagerungen zwischen jedem der einzelbandigen optischen Bursts und den optischen Linien des einzigen optischen Mehrwellenlängen-Lokaloszillators besteht; und
Filtern, ausgehend von dem gemischten optischen Signal, mindestens einer Überlagerung zwischen jedem der einzelbandigen optischen Bursts und einer der optischen Linien des optischen Mehrwellenlängen-Lokaloszillators und Durchlassen, für jeden einzelbandigen optischen Burst, nur der Überlagerung zwischen dem einzelbandigen optischen Burst und der optischen Linie mit der Wellenlänge (λ'₃), die der Wellenlänge (λ₃) entspricht, die den einzelbandigen optischen Burst trägt, und gleichzeitig Zurückweisen der Überlagerungen zwischen dem einzelbandigen optischen Burst und den anderen optischen Linien mit einer Wellenlänge, die nicht der Wellenlänge (λ₃) entspricht, die den einzelbandigen optischen Burst trägt.

11. Verfahren zum kohärenten Empfangen nach Anspruch 10, bei dem die Schritte des Mischens und Filterns für jeden folgenden einzelbandigen optischen Burst, aus dem das optische Mehrwellenlängensignal besteht, iterativ wiederholt werden.

12. Optisches Netzwerk, umfassend mindestens einen kohärenten optischen Empfänger (1) nach einem der Ansprüche 1 bis 7 und/oder einen optischen Sender-Empfänger (2) nach einem der Ansprüche 8 oder 9.

## Claims

1. Coherent optical receiver (1) capable of receiving a multiple-wavelength optical signal (S_{Multi-λ}) composed at least of a succession of single-band optical bursts, each single-band optical burst being carried by a distinct wavelength out of a plurality of carrier wavelengths (λ₁, λ₂, λ₃, λ₄, λ₅) over a determined spectral band, the optical receiver comprising:
optical generation means (10) arranged to deliver a single multiple-wavelength optical local oscillator (LO) composed of a plurality of optical lines with wavelengths (λ'₁, λ'₂, λ'₃, λ'₄, λ'₅) corresponding to the carrier wavelengths;
optical mixing means (20) arranged to receive two optical signals as input, the first of said optical signals being the single multiple-wavelength optical local oscillator (LO) and the second of said optical signals being the multiple-wavelength optical signal (S_{Multi-λ}), in order to deliver at least one optical signal (S_{MIX}), called mixed optical signal, composed of a plurality of beats between each of the single-band optical bursts of the multiple-wavelength optical signal (S_{Multi-λ}) and the optical lines of the single multiple-wavelength optical local oscillator; and
detection means (30) comprising a photo-electric conversion module (31) followed by at least one electrical module processing the mixed optical signal after conversion in the photo-electric conversion module, in particular an analogue-digital conversion module (33) and/or a digital processing module;
the passband (ΔB) of the detection means corresponding to the passband of the electrical module and having a spectral width greater than half the width of the spectral band of said at least one single-band optical burst, so as to filter, from the mixed optical signal, at least one beat between each of the single-band optical bursts and one of the optical lines of the multiple-wavelength optical local oscillator, by allowing passage, for each single-band optical burst, of only the beat between said single-band optical burst and the optical line of wavelength (λ'₃) corresponding to the wavelength (λ₃) carrying said single-band optical burst, while rejecting the beats between said single-band optical burst and the other optical lines of a wavelength not corresponding to the wavelength (λ₃) carrying said single-band optical burst.

2. Coherent optical receiver according to one of Claims 1, wherein the optical generation means (10) comprise an optical source (11) generating an optical signal with continuous wavelength and a multiple-wavelength generation module (13) arranged to deliver, from the optical signal with continuous wavelength received from the optical source, the multiple-wavelength optical local oscillator.

3. Coherent optical receiver according to Claim 2, wherein the optical source (11) generates an optical signal with a spectral line width less than 400 kHz, in particular a spectral line width equal to 100 kHz.

4. Coherent optical receiver according to one of Claims 1 to 3, wherein the detection means (30) comprise at least one optical module, in particular an optical filter and/or a photo-electric conversion module (31), the passband (ΔB) of the processing means corresponding to the passband of the optical module and having a spectral width greater than the width of the spectral band of said at least one single-band optical burst.

5. Coherent optical receiver according to Claim 4, wherein:
the passband of the detection means covers at least one centre frequency (f_{c}) equal to the difference between the wavelength carrying said at least one single-band optical burst and the wavelength of the optical line corresponding to said carrier wavelength, in particular a zero centre frequency.

6. Coherent optical receiver according to one of Claims 4 and 5, wherein the spectral bands of the single-band optical bursts are separated by a spectral guard interval and in which the width of the passband of the detection means is less than half the sum of the width of the spectral band of one of the single-band bursts and of the widths of the spectral guard intervals around it.

7. Coherent optical receiver according to Claim 6, wherein the width of the spectral band of the single-band optical bursts is less than or equal to 8 GHz and in which the width of the spectral guard intervals is greater than or equal to 1 GHz and in which the width of the passband of the detection means lies between 4 and 5 GHz.

8. Optical transceiver (2) capable of receiving a first multiple-wavelength optical signal (S_{Multi-λ}) and of transmitting a second multiple-wavelength optical signal (S'_{Multi-λ}) composed of a succession of single-band optical bursts, each single-band optical burst being carried by a distinct wavelength out of a plurality of carrier wavelengths (λ₁, λ₂, λ₃, λ₄, λ₅) over a determined spectral band, the optical transceiver comprising:
a coherent optical receiver according to one of Claims 1 to 7; and
transmission means (50) arranged to receive at least a part of the multiple-wavelength optical local oscillator (LO) generated by the coherent optical receiver and generate the second multiple-wavelength optical signal (S'_{Multi-λ}) by means of said at least one part of said multiple-wavelength optical local oscillator (LO) .

9. Optical transceiver (2) according to Claim 8, wherein the transmission means (50) comprise:
an optical demultiplexer (51) arranged to separate said at least one part of the multiple-wavelength optical local oscillator (LO) into a plurality of single-wavelength optical signals corresponding to said optical lines;
a plurality of optical gates (53ᵢ) respectively receiving said optical signals corresponding to said optical lines,
an optical multiplexer (55) combining the outputs of said optical gates; and
an optical modulator (57) arranged to modulate, over a determined spectral bandwidth, the optical signal at the output of the optical multiplexer with data (dᵢ) to be transmitted.

10. Method for coherent reception of a multiple-wavelength optical signal (S_{Multi-λ}) in an optical network, said multiple-wavelength optical signal being composed of a succession of single-band optical bursts, each single-band optical burst being carried by a distinct wavelength out of a plurality of carrier wavelengths (λ₁, λ₂, λ₃, λ₄, λ₅) over a determined spectral band, the method comprising the following steps:
generating a single multiple-wavelength optical local oscillator (LO) composed of a plurality of optical lines with wavelengths (λ'₁, λ'₂, λ'₃, λ'₄, λ'₅) corresponding to the carrier wavelengths (λ₁, λ₂, λ₃, λ₄, λ₅) ;
mixing the single multiple-wavelength optical local oscillator (LO) and the multiple-wavelength optical signal (S_{Multi-λ}) in order to deliver at least one optical signal (S_{MIX}), called mixed optical signal, composed of a plurality of beats between each of said single-band optical bursts and the optical lines of the single multiple-wavelength optical local oscillator; and
filtering, from the mixed optical signal, at least one beat between each of the single-band optical bursts and one of the optical lines of the multiple-wavelength optical local oscillator, by allowing passage, for each single-band optical burst, of only the beat between said single-band optical burst and the optical line of wavelength (λ'₃) corresponding to the wavelength (λ₃) carrying said single-band optical burst, while rejecting the beats between said single-band optical burst and the other optical lines of wavelength not corresponding to the wavelength (λ₃) carrying said single-band optical burst.

11. Coherent reception method according to Claim 10, wherein the mixing and filtering steps are repeated iteratively for each successive single-band optical burst of which the multiple-wavelength optical signal is composed.

12. Optical network comprising at least one coherent optical receiver (1) according to one of Claims 1 to 7 and/or an optical transceiver (2) according to one of Claims 8 and 9.
